# EUROPÄISCHE PATENTANMELDUNG

(11) **EP 1 182 770 A2**
(43) Veröffentlichungstag der Anmeldung: **27.02.2002**
(21) Anmeldenummer: 01118959.4
(22) Anmeldetag: 04.08.2001
(51) Int. Cl.: H02P 6/00, H02P 7/00

(54) **Elektromotorischer Antrieb und Verfahren zum Betreiben eines elektronisch kommutierten Elektromotors**

(30) Priorität: 24.08.2000 DE 10041606
(71) Anmelder: Berger Lahr GmbH & Co. KG, 77933 Lahr (DE)
(72) Erfinder: Moddemann, Jörg, 77749 Hohberg (DE)
(74) Vertreter: Maucher, Wolfgang, Dipl.-Ing.

(57) **Zusammenfassung**

Bei einem Verfahren zum Betreiben eines elektronisch kommutierten Elektromotors (2) wird ein Sollwertsignal für die Kommutierungsposition des Rotors des Elektromotors (2) bereitgestellt und die Wicklungen des Elektromotors (2) werden derart bestromt, daß der Rotor des Elektromotors (2) an der durch das Sollwertsignal vorgegebenen Kommutierungsposition positioniert wird. Es wird ein Meßsignal für die Lage des Rotors des Elektromotors (2) erfaßt, bewertet und mit dem Sollwertsignal für die Kommutierungsposition verglichen. Die Bestromung der Wicklungen des Elektromotors (2) wird unterbrochen, wenn das Lage-Meßsignal und/oder das Sollwertsignal für die Kommutierungsposition einen vorgegebenen Höchstwert überschreiten, und/oder wenn das Differenzsignal zwischen dem Lage-Meßsignal und dem Sollwertsignal für die Kommutierungsposition außerhalb eines vorgegebenen Toleranzbereichs liegt.

## Beschreibung

Die Erfindung betrifft ein Verfahren zum Betreiben eines elektronisch kommutierten Elektromotors, wobei ein Sollwertsignal für die Kommutierungsposition des Rotors des Elektromotors bereitgestellt und die Wicklungen des Elektromotors derart bestromt werden, daß der Rotor des Elektromotors an der durch das Sollwertsignal vorgegebenen Kommutierungsposition positioniert wird, und wobei ein Meßsignal für die Lage des Rotors des Elektromotors erfaßt wird.

Außerdem bezieht sich die Erfindung auf einen elektromotorischen Antrieb, mit einem Elektromotor, der über einen Frequenzumrichter am Wechselstromnetz angeschlossen ist, wobei der Frequenzumrichter mit einer Steuereinrichtung verbunden ist, die einen Anschluß für ein Sollwertsignal für die Kommutierungsposition des Rotors des Elektromotors aufweist, und wobei eine einen Lagesensor zum Messen der Rotorposition aufweisende Lagemeßeinrichtung vorgesehen ist.

Aus der Praxis kennt man bereits einen elektromotorischen Antrieb der eingangs genannten Art, der zum Messen der Rotorposition des Elektromotors zwei Lagesensoren aufweist. Die Lagesensoren sind jeweils als Drehgeber ausgebildet, die starr mit der Achse des Ro-tors des Elektromotors gekoppelt sind. Die Meßsignalausgänge dieser Lagesensoren sind jeweils mit einem Eingang einer Vergleichseinrichtung verbunden, mittels der die Meßsignale der beiden Lagesensoren mit eineinander verglichen werden. Der Ausgang der Vergleichseinrichtung ist mit einer Abschalteinrichtung verbunden, welche die Stromzufuhr zu dem Elektromotor unterbricht, wenn zwischen den beiden Meßsignalen der Lagesensoren eine Differenz festgestellt wird, die außerhalb eines vorgegebenen Toleranzbereichs liegt. Der elektromotorische Antrieb ermöglicht eine sichere Überwachung der Bewegung des Rotors des Elektromotors. Der elektromotorische Antrieb hat jedoch den Nachteil, daß die Lagesensoren noch vergleichsweise aufwendig und teuer sind. Außerdem weisen die beiden mit dem Elektromotor mechanisch gekoppelten Lagesensoren auch noch einen gewissen Platzbedarf auf.

Aus der Praxis kennt man auch bereits einen elektromotorischen Antrieb der eingangs genannten Art, der zum Messen der Rotorposition des Elektromotors nur einen Lagesensor aufweist. Der Meßsignalausgang der Lagemeßeinrichtung ist mit den Eingängen zweier Überwachungseinrichtungen verbunden, welche das Meßsignal des Lagesensors unabhängig voneinander überwachen. Mittels der Überwachungseinrichtungen sind bestimmte, typische Fehler der Lagemeßeinrichtung erkennbar, wie zum Beispiel das Auftreten eines Kabelbruchs, eines nicht plausiblen Lagemeßsignals oder einer an dem Meßsignalausgang der Lagemeßeinrichtung anliegenden elektrischen Ausgangsspannung, die außerhalb eines zulässigen Spannungsbereichs liegt. Wenn eine der beiden Überwachungseinrichtungen einen solchen Fehler detektiert, wird der Elektromotor abgeschaltet. Durch die beiden Überwachungseinrichtungen können zwar die Kosten für eine zweite Lagemeßvorrichtung eingespart werden, jedoch sind auch die beiden Überwachungseinrichtungen noch vergleichsweise aufwendig und teuer. Ungünstig ist außerdem, daß die Fehlererkennungsfunktionen der Überwachungseinrichtungen speziell auf die Lagemeßvorrichtung abgestimmt sein müssen, so daß für elektrische Antriebe mit unterschiedlichen Lagemeßvorrichtungen auch unterschiedliche Überwachungseinrichtung erforderlich sind, was vor allem die Entwicklungs- und Lagerhal-tungskosten für die Überwachungseinrichtungen verteuert.

Aus DE 43 22 146 A1 ist auch bereits ein elektromotorischer Antrieb bekannt, bei dem die Zwischenkreisspannung des Frequenzumrichters durch Zwischenschalten eines Transformators absenkbar ist. Bei reduzierter Zwischenkreisspannung wird die Drehzahl des Elektromotors durch Auswertung der Drehfrequenz ermittelt und mit einem vorgegebenen Grenzwert verglichen. Beim Überschreiten dieses Grenzwertes wird der Elektromotor abgeschaltet. Der elektromotorische Antrieb weist jedoch nur eine vergleichsweise geringe Betriebssicherheit auf, da Fehlpositionierungen des Rotors nur dann zur Abschaltung des Elektromotors führen, wenn die Rotordrehzahl den Drehzahlgrenzwert überschreitet. Durch Ausnutzung des Drehfeldes kann zwar eine mechanische Komponente für die Drehzahlmeßvorrichtung eingespart werden, jedoch ist auch die Messung des Drehfeldes noch mit einem gewissen Aufwand verbunden. Ungünstig ist außerdem, daß der Elektromotor aufgrund der reduzierten Zwischenkreisspannung nur eine vergleichsweise geringe Drehzahl und eine geringe Beschleunigung ermöglicht.

Aus DE 43 30 823 C2 kennt man auch bereits einen geregelten elektromotorischen Antrieb, bei dem die Drehzahl des Elektromotors zweifach überwacht wird. In einem ersten Überwachungskanal wird die Drehzahl des Elektromotors mit einem mit dessen Rotorachse gekoppelten Drehzahlsensor ermittelt und der Elektromotor wird abgeschaltet, wenn das Meßsignal dieses Drehzahlsensors einen vorgegebenen Grenzwert überschreitet. Der Elektromotor wird mittels einer Motorregelung geregelt, die eine Kaskadenstruktur aufweist, wobei einem Stromregler ein Drehzahlregler und diesem wiederum ein Lageregler vorgeschaltet ist. In einem zweiten Überwachungskanal wird der zeitliche Verlauf des Stromes in wenigstens einer Phasenzuleitung überwacht und aus dem Verlauf des Stromes wird die Drehzahl des Motors ermittelt. Wenn das so ermittelte Drehzahlsignal einen vorgegebenen Grenzwert überschreitet, wird der Elektromotor abgeschaltet. Auch dieser elektromotorische Antrieb weist nur eine vergleichsweise geringe Betriebssicherheit auf, da Fehlpositionie-rungen des Rotors auch hier nur bei einer Überschreitung des Drehzahlgrenzwertes zur Abschaltung des Elektromotors führen.

Es besteht deshalb die Aufgabe, ein Verfahren zum Betreiben eines elektronisch kommutierten Elektromotors zu schaffen, das auf einfache Weise eine Bewegungsüberwachung und somit einen sicheren Betrieb des Elektromotors ermöglicht. Außerdem besteht die Aufgabe, einen einfach aufgebauten elektromotorischen Antrieb zu schaffen, der einen sicheren, bewegungsüberwachten Betrieb des Elektromotors ermöglicht.

Diese Aufgabe wird bezüglich des Verfahrens dadurch gelöst, daß ein Sollwertsignal für die Kommutierungsposition des Rotors des Elektromotors bereitgestellt und die Wicklungen des Elektromotors derart bestromt werden, daß der Rotor des Elektromotors an der durch das Sollwertsignal vorgegebenen Kommutierungsposition positioniert wird, daß ein Meßsignal für die Lage des Rotors des Elektomotors erfaßt und mit einem Sollwertsignal für die Kommutierungsposition verglichen wird, und daß die Bestromung der Wicklungen des Elektromotors unterbrochen wird, wenn das Lage-Meßsignal und/oder das Sollwertsignal für die Kommutierungsposition einen vorgegebenen Höchstwert überschreiten, und/oder wenn das Differenzsignal zwischen dem Lage-Meßsignal und dem Sollwertsignal für die Kommutierungsposition außerhalb eines vorgegebenen Toleranzbereichs liegt.

Die vorstehend genannte Aufgabe wird bezüglich des elektromotorischen Antriebs dadurch gelöst, daß der Elektromotor über einen Fre-quenzumrichter am Wechselstromnetz angeschlossen ist, und daß der Frequenzumrichter eine Steuereinrichtung aufweist, die einen Anschluß für ein Sollwertsignal für die Kommutierungsposition des Rotors des Elektromotors hat, daß eine einen Lagesensor zum Messen der Rotorposition aufweisende Lagemeßeinrichtung vorgesehen ist, daß der Meßsignalausgang der Lagemeßeinrichtung und/oder der Anschluß für das Sollwertsignal mit den Eingängen wenigstens einer Vergleichseinrichtung verbunden sind, deren Ausgang zum Abschalten des Elektromotors beim Überschreiten eines vorgegebenen Höchstwertes durch das Lage-Meßsignal und/oder das Sollwertsignal für die Kommutierungsposition und/oder beim Auftreten einer außerhalb eines vorgegebenen Toleranzbereichs liegenden Differenz zwischen dem Sollwertsignal und dem Meßsignal der Lagemeßeinrichtung mit einer Abschalteinrichtung verbunden ist.

In vorteilhafter Weise wird also das vorhandene Sollwertsignal für die Kommutierungsposition des Elektromotor-Rotors zur Überwachung der Lage des Rotors genutzt, so daß zusätzlich zu dem Meßsignal für die Lage des Rotors noch ein weiteres, eine Überprüfung der Rotorlage ermöglichendes Signal ausgewertet wird. Dabei macht sich die Erfindung die Erkenntnis zunutze, daß sich der Rotor des Elektromotors nur dann drehen kann, wenn sich auch der an die Wicklungen des Elektromotors angelegte Strombeziehungsweise Spannunsvektor dreht. Anhand der Kommutierungsposition kann also auf die Position des Rotors geschlossen werden, sie stellt somit zu dem aus der Lagemeßeinrichtung bestehenden ersten Kanal einen zweiten Kanal zur Lageerfassung dar. Eine aufwendige und teure zweite Lagemeßeinrichtung kann somit eingespart werden. Durch den Vergleich der beiden Signale miteinander und/oder wenigstens eines der Signale mit dem vorgegebenen Höchstwert sowie die Abschaltung des Elektromotors im Fehlerfall ergibt sich eine einfach durchzufüh- rende zweifache Überwachung der Rotorbewegung, die einen sicheren Betrieb des Elektromotors ermöglicht.

Nachfolgend sind Ausführungsbeispiele der Erfindung anhand der Zeichnung näher erläutert. Es zeigen zum Teil stark schematisiert:

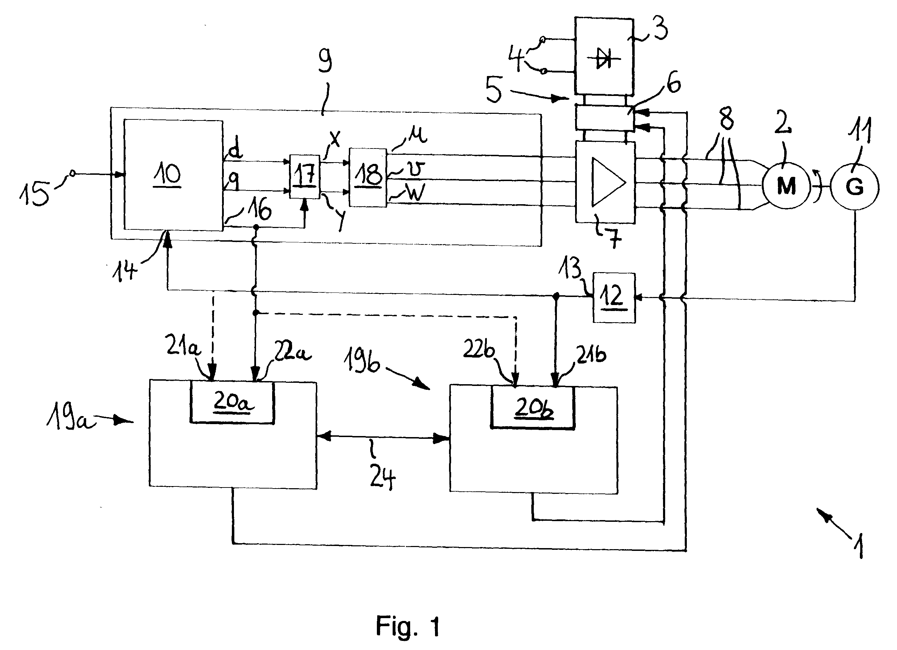

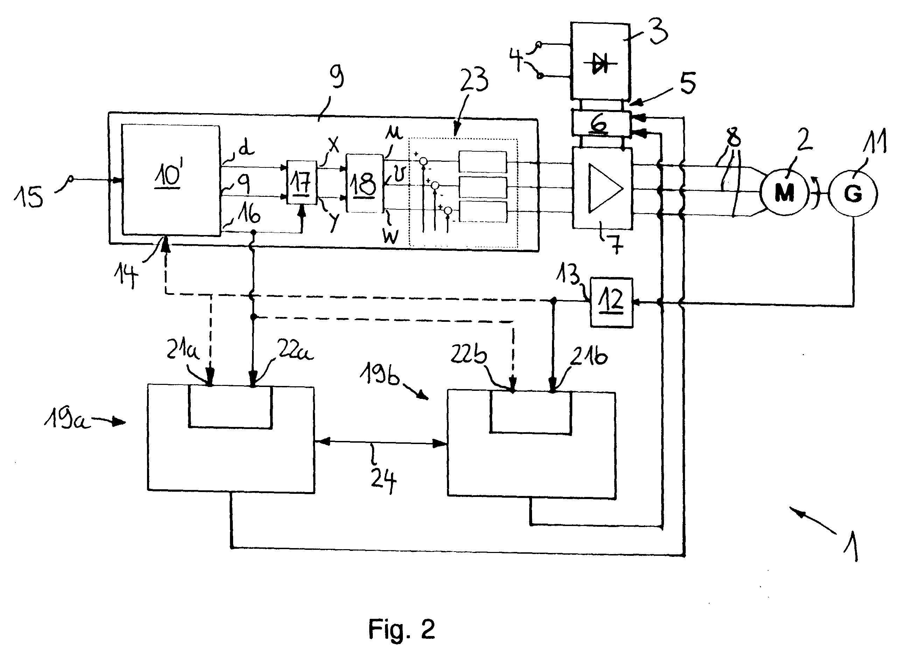

- Fig. 1 und 2: ein Schaltbild eines elektromotorischen Antriebs, bei dem die Bewegung des Rotors des Elektromotors zweikanalig überwacht wird.

Ein im ganzen mit 1 bezeichneter elektromotorischer Antrieb weist einen Elektromotor 2 auf, der über einen Frequenzumrichter am Wechselstromnetz angeschlossen ist. Der Frequenzumrichter hat einen Gleichrichter 3, dessen Eingangsanschlüsse 4 mit dem Wechselstromnetz und dessen Ausgangsanschlüsse mit einem Gleichspannungs-Zwischen-kreis 5 verbunden sind. Der Zwischenkreis 5 ist über eine Abschalteinrichtung 6 an einer Endstufe 7 angeschlossen. Die Endstufe 6 weist eine in der Zeichnung nicht näher dargestellte Brückenschaltung auf, die für jeden Wicklungsstrang des Elektromotors 2 jeweils eine Halbbrücke mit zwei Brückenzweigen aufweist, in denen jeweils ein Halbleiterschalter angeordnet ist. Die beiden Brückenzweige jeder Halbbrücke sind jeweils mit einem ihrer Anschlüsse miteinander verbunden und mit ihrem anderen Anschluß an unterschiedlichen Polen des Zwischenkreises 5 angeschlossen. Die die Verbindungsstellen der Brückenzweige bildenden Brücken-mittelpunkte sind jeweils über eine Zuleitung 8 mit einem Stromversorgungsanschluß des Elektromotors 2 verbunden. Mittels der Endstufe 6 kann die an der Endstufe 7 anliegende Zwischenkreisspannung und/oder eine zur Ansteuerung der Halbleiterschalter der Endstufe 7 vorgesehene Hilfsspannung abgeschaltet werden, so daß dann die Stromzufuhr zu dem Elektromotor unterbrochen ist.

Der Frequenzumrichter weist eine Steuereinrichtung 9 auf, mittels der die in den Brückenzweigen der Halbbrücke angeordneten Halbleiterschalter entsprechend einem vorgegebenen Pulsweiten-Modulations-Schaltmuster derart ansteuerbar sind, daß sich in den Wicklungen des Elektromotors ein Drehfeld ausbildet.

Bei dem Ausführungsbeispiel nach Fig.1 weist die Steuereinrichtung 9 einen Regler 10 auf, der eine in der Zeichnung nicht näher dargestellte Kaskadenstruktur hat, bei der einem Stromregler ein Drehzahlregler und diesem wiederum ein Lageregler vorgeschaltet ist. Der Stromregler hat Ausgangsanschlüsse d, q für die auf ein rotorfestes Koordinatensystem bezogenen Komponenten eines Führungssignalvektors, der die vektorielle Summe der in die Wicklungen des Elektromotors 2 über die Zuleitungen 8 einzuspeisenden elektrischen Ströme repräsentiert. Der Elektromotor 2 ist bei dem Ausführungsbeispiel nach Fig.1 als dreiphasiger Servomotor ausgebildet.

Der Antrieb 1 hat außerdem eine Lagemeßeinrichtung mit einem als Drehwinkelgeber ausgebildeten Lagesensor 11, der mechanisch mit der Welle des Elektromotor-Rotors verbunden ist und beispielsweise als optischer Encoder ausgebildet sein kann. Dem Lagesensor 11 ist eine Signalaufbereitungseinrichtung 12 nachgeschaltet, mittels der das Ausgangssignal des Lagesensors 11 in ein Rechtecksignal umgeformt wird, das an dem Meßsignalausgang 13 der Lagemeßeinrichtung anliegt. Der Meßsignalausgang 13 ist mit einem ersten Eingang 14 eines Differenzglieds verbunden, an dessen zweitem Eingang 15 ein Sollpositionssignal für die Lage des Elektromotor-Rotors anliegt. Der Ausgang dieses Differenzglieds ist mit dem Eingang des Positionsreglers verbunden. Bei dem Ausführungsbeispiel nach Fig. 2, bei dem der Elektromotor 2 ein Schrittmotor ist, können der ersten Eingang 14 und das Differenzglied gegebenenfalls entfallen, was durch eine strichliniert dargestellte Verbindungsleitung zwischen dem Meßsignalausgang 13 und dem ersten Eingang 14 angedeutet ist. In diesem Fall wird der Schrittmotor gesteuert betrieben.

Die Steuereinrichtung 9 hat außerdem einen Anschluß 16 für ein Sollwertsignal für die Kommutierungsposition des Rotors des Elektromotors 2. Bei dem Ausführungsbeispiel nach Fig.1 wird die Stromregelung in rotorfesten Koordinaten durchgeführt, das heißt in einem Koordinatensystem, das sich mit dem Rotor des Elektromotors 2 mitdreht. Die Kommutierungsposition entspricht dann dem Winkel zwischen dem rotorfesten Führungssignalvektor, dessen Komponenten an den Anschlüssen d, q des Reglers 10 anliegen, und einer Bezugsachse des Koordinatensystems des Stators.

Die Steuereinrichtung 9 weist eine erste Transformationseinrichtung 17 auf, mittels welcher der auf das rotorfeste Koordinatensystem bezogene Führungsvektor in einen auf statorfeste Koordinatensystem bezogenen Führungsvektor transformiert wird, dessen Komponenten an den Ausgangsanschlüssen x, y der Transformationseinrichtung 17 anliegen. Der ersten Transformationseinrichtung 17 ist eine zweite Transformationseinrichtung 18 nachgeschaltet, mittels welcher der an den Anschlüssen x, y anliegende Führungssignalvektor in eine der Anzahl der Phasen des Elektromotors 2 entsprechende Anzahl Komponenten aufgespaltet wird. Diese Komponenten liegen an den Ausgangsanschlüssen u, v, w der zweiten Transformationseinrichtung 18 an und bilden die Sollwerte für die in die einzelnen Wicklungsstränge des Elektromotors 2 einzuspeisenden Wicklungsströme.

Gegebenenfalls kann anstelle des Stromreglers auch ein Spannungsregler zum Regeln der an die Wicklungsstränge des Elektromotors 2 anzulegenden elektrischen Spannungen vorgesehen sein. An den Ausgangsanschlüssen u, v, w der zweiten Transformationseinrichtung 18 liegen dann die Sollwerte für die an die Wicklungsstränge des Elektromotors 2 anzulegenden Spannungen an.

Das Sollwertsignal für die Kommutierungsposition wird einer ersten Überwachungseinrichtung 19a zugeführt, die eine Vergleichseinrichtung 20a zum Vergleichen des Sollwertsignals mit einem vorgegebenen Sollwertsignal-Höchstwert aufweist. Ein erster Eingang 22a der ersten Vergleichseinrichtung 20a ist dazu mit dem Anschluß 16 für das Sollwertsignal der Kommutierungsposition verbunden. Ein in der Zeichnung nicht näher dargestellter zweiter Eingang der ersten Vergleichseinrichtung 20a ist mit einem Speicher verbunden, in dem der Sollwertsignal-Höchstwert abgelegt ist. Ein Ausgang der ersten Vergleichseinrichtung 20a ist mit einem ersten Steuereingang der Abschalteinrichtung 6 verbunden. Über diesen Steuereingang wird die Bestromung der Wicklungen des Elektromotors 2 unterbrochen, wenn das Kommutierungspositions-Sollwertsignal den vorgegebenen Höchstwert überschreitet.

Gegebenenfalls kann die erste Vergleichseinrichtung 20a noch einen dritten Eingang 21a aufweisen, der mit dem Meßsignalausgang 13 der Lagemeßeinrichtung verbunden ist. In Fig.1 und 2 ist die entsprechende Verbindungsleitung jeweils strichliniert eingezeichnet. In der ersten Vergleichseinrichtung 20a kann dann zur Fehleraufdeckung ein Differenzsignal aus dem Lage-Meßsignal und dem Sollwertsignal gebildet und mit einem vorgegebenen Toleranzbereich verglichen werden. Falls der Vergleich ergibt, daß das Differenzsignal außerhalb eines vorgegebenen Toleranzbereichs liegt, wird die Bestromung der Wicklungen des Elektromotors 2 durch Ausgeben eines entsprechenden Steuersignals an den ersten Steuereingang der Abschalteinrichtung 6 unterbrochen.

Das Meßsignal für die Lage des Rotors des Elektromotors wird einer zweiten Überwachungseinrichtung 19b zugeführt, die eine Vergleichseinrichtung 20b zum Vergleichen dieses Meßsignals mit einem vorgegebenen, in der Überwachungseinrichtung 19b abgelegten Meßsignal-Höchstwert aufweist. Ein erster Eingang 21b der zweiten Vergleichseinrichtung 20b ist dazu mit dem Meßsignalausgang 13 der Lagemeßeinrichtung verbunden. Ein in der Zeichnung nicht näher dargestellter zweiter Eingang der zweiten Vergleichseinrichtung 20b ist mit einem Speicher verbunden, in dem der Meßsignal-Höchstwert abgelegt ist. Ein Ausgang der zweiten Vergleichseinrichtung 20b ist mit einem zweiten Steuereingang der Abschalteinrichtung 6 verbunden. Über diesen Steuereingang wird die Bestromung der Wicklungen des Elektromotors 2 unterbrochen, wenn das Meßsignal den vorgegebenen Höchstwert überschreitet.

Gegebenenfalls kann die zweite Vergleichseinrichtung 20b noch einen dritten Eingang 22b aufweisen, der mit dem Meßsignalausgang 13 der Lagemeßeinrichtung verbunden ist. In Fig.1 und 2 ist die entsprechende Verbindungsleitung jeweils strichliniert eingezeichnet. In der zweiten Vergleichseinrichtung 20b kann dann zur Fehleraufdeckung ebenfalls ein Differenzsignal aus dem Lage-Meßsignal und dem Sollwertsignal gebildet und mit einem vorgegebenen Toleranzbereich verglichen werden. Falls der Vergleich ergibt, daß das Differenzsignal außerhalb eines vorgegebenen Toleranzbereichs liegt, wird die Bestromung der Wicklungen des Elektromotors 2 durch Ausgeben eines entsprechenden Steuersignals an den zweiten Steuereingang der Abschalteinrichtung 6 unterbrochen. Es findet also eine zweikanalige Überwachung der Lage des Elektromotor-Rotors mit Abschaltung des Elektromotors 2 im Fehlerfall statt.

Bei dem Ausführungsbeispiel nach Fig.2 ist der Elektromotor 2 ein Schrittmotor. Die Steuereinrichtung 9 weist bei diesem Ausführungsbeispiel einen Regler mit einer Kaskadenstruktur auf, der einen Stromregler 23 umfaßt, dem ein Drehzahl- und Lageregler 10' vorgeschaltet ist. Der Drehzahlregler weist Ausgangsanschlüsse d, q für die Komponenten eines Führungssignalvektors auf, der Sollwerte für die vektorielle Summe der in die Wicklungen des Elektromotors 2 über die Zuleitungen 8 einzuspeisenden elektrischen Ströme bildet. Die Steuereinrichtung 9 hat außerdem einen Anschluß 16 für ein Sollwertsignal für die Kommutierungsposition des Elektromotor-Rotors.

Bei dem Ausführungsbeispiel nach Fig.2 weist die Steuereinrichtung 9 eine erste Transformationseinrichtung 17 auf, mittels welcher der an den Ausgangsanschlüssen d, q anliegende, auf das rotorfeste Koordinatensystem bezogene Führungssignalvektor in einen auf das statorfeste Koordinatensystem bezogenen, an den Ausgangsanschlüssen x, y anliegenden Führungssignalvektor transformiert wird. Der ersten Transformationseinrichtung 17 ist eine zweite Transformationseinrichtung 18 nachgeschaltet, mittels welcher der Führungssignalvek- tor x, y in drei Komponenten zerlegt wird, die an den Ausgangsanschlüssen u, v, w anliegen und die Sollwerte für die in die einzelnen Wicklungsstränge des Elektromotors 2 einzuspeisenden Wicklungsströme bilden. Entsprechend wird bei einem n-phasigen Elektromotor 2 (n = 2, 3, 4, 5, ...) der Führungssignalvektor in n Komponenten aufgespalten.

In Fig.2 ist erkennbar, daß die Stromregelung in statorfesten Koordinaten durchgeführt wird. Die Kommutierungsposition entspricht dann dem Winkel zwischen dem an den Ausgangsanschlüssen u, v, w anliegenden Komponenten des Führungssignalvektors, gemessen zum Stator. Da sich durch die in den statorfesten Koordinaten erfolgende Stromregelung eine geringe Phasenverschiebung zwischen dem an den Ausgangsanschlüssen u, v, w anliegenden Führungssignalvektor und dem an den Wicklungen des Elektromotors 2 anliegenden Spannungsvek-tor ergeben kann, kann die Kommutierungsposition bei dem Ausführungsbeispiel nach Fig. 2 etwas von dem Winkel des Spannungsvektors, mit dem der Elektromotor 2 beaufschlagt wird, abweichen. Die Sicherheit der Bewegungsüberwachung des Elektromotors 2 wird durch diese vergleichsweise geringe Abweichung aber praktisch nicht beeinträchtigt. Die Lagemeßeinrichtung mit dem Lagesensor 11, die Vergleichseinrichtungen 20a, 20b und die Abschalteinrichtung 6 entsprechend bei dem Ausführungsbeispiel nach Fig.1 im wesentlichen denjenigen nach Fig.2.

Bei den Ausführungsbeispielen nach Fig.1 und 2 sind die Überwachungseinrichtungen 19a, 19b über eine bidirektionale Datenschnittstelle 24 miteinander verbunden. Über diese Datenschnittstelle 24 können zusätzliche, in den Überwachungseinrichtungen 19a, 19b bereitgestellte Informationen an die jeweils andere Überwachungseinrichtung 19b, 19a übermittelt und dort mit den entsprechenden Informationen dieser Überwachungseinrichtung 19b, 19a verglichen werden. Diese zusätzlichen Informationen können beispielsweise Grenzwerte für ein aus dem Lage-Meßsignal oder dem Sollwertsignal gebildetes Geschwindigkeitsmeßsignal umfassen. Wenn bei dem kreuzweisen Vergleich dieser Informationen eine Abweichung festgestellt wird, wird der Elektromotor 2 abgeschaltet. Gegebenenfalls können über die Datenschnittstellen 24 auch Geschwindigkeitsmeßsignale übermittelt werden, die in den Überwachungseinrichtungen 19a, 19b entweder aus dem Lage-Meßsignal oder dem Sollwertsignal für die Kommutierungsposition gebildet werden. Die Geschwindigkeitsmeßsignale können dann ebenfalls kreuzweise miteinander verglichen werden, wobei der Elektromotor 2 abgeschaltet wird, wenn die Differenz zwischen dem aus dem Lage-Meßsignal gebildeten Geschwindigkeitssignal einerseits und dem aus dem Sollwertsignal für die Kommutierungsposition gebildeten Geschwindigkeitssignal andererseits außerhalb eines vorgegebenen Geschwindigkeits-Toleranzbereichs liegt.

Bei dem Verfahren zum Betreiben des elektronisch kommutierten Elektromotors 2 wird also ein Sollwertsignal für die Kommutierungsposition des Rotors des Elektromotors 2 bereitgestellt und die Wicklungen des Elektromotors 2 werden derart bestromt, daß der Rotor des Elektromotors 2 an der durch das Sollwertsignal vorgegebenen Kommutierungsposition positioniert wird. Es wird ein Meßsignal für die Lage des Rotors des Elektromotors 2 erfaßt und bewertet sowie mit dem Sollwertsignal für die Kommutierungsposition verglichen. Die Bestromung der Wicklungen des Elektromotors 2 wird unterbrochen, wenn das Lage-Meßsignal und/oder das Sollwertsignal für die Kommutierungsposition einen vorgegebenen Höchstwert überschreiten, und/oder wenn das Differenzsignal zwischen dem Lage-Meßsignal und dem Sollwertsignal für die Kommutierungsposition außerhalb eines vorgegebenen Toleranzbereichs liegt.

## Patentansprüche

1. Verfahren zum Betreiben eines elektronisch kommutierten Elektromotors (2), wobei ein Sollwertsignal für die Kommutierungsposition des Rotors des Elektromotors (2) bereitgestellt und die Wicklungen des Elektromotors (2) derart bestromt werden, daß der Rotor des Elektromotors (2) an der durch das Sollwertsignal vorgegebenen Kommutierungsposition positioniert wird, wobei ein Meßsignal für die Lage des Rotors des Elektromotors (2) erfaßt und mit dem Sollwertsignal für die Kommutierungsposition verglichen wird, und wobei die Bestromung der Wicklungen des (2) Elektromotors unterbrochen wird, wenn das Lage-Meßsignal und/oder das Sollwertsignal für die Kommutierungsposition einen vorgegebenen Höchstwert überschreiten, und/oder wenn das Differenzsignal zwischen dem Lage-Meßsignal und dem Sollwertsignal für die Kommutierungsposition außerhalb eines vorgegebenen Toleranzbereichs liegt.

2. Elektromotorischer Antrieb (1), mit einem Elektromotor (2), der über einen Frequenzumrichter am Wechselstromnetz angeschlossen ist, wobei der Frequenzumrichter eine Steuereinrichtung (9) aufweist, die einen Anschluß (16) für ein Sollwertsignal für die Kommutierungsposition des Rotors des Elektromotors (2) hat, wobei eine einen Lagesensor (11) zum Messen der Rotorposition aufweisende Lagemeßeinrichtung vorgesehen ist, wobei der Meßsignalausgang (13) der Lagemeßeinrichtung und/oder der Anschluß (16) für das Sollwertsignal mit den Eingängen wenigstens einer Vergleichseinrichtung (20a, 20b) verbunden sind, deren Ausgang zum Abschalten des Elektromotors (2) beim Überschreiten eines vorgegebenen Höchstwertes durch das Lage-Meßsignal und/oder das Sollwertsignal für die Kommutierungsposition und/oder beim Auftreten einer außerhalb eines vorgegebenen Toleranzbereichs liegenden Differenz zwischen dem Sollwertsignal und dem Meßsignal der Lagemeßeinrichtung mit einer Abschalteinrichtung (6) verbun- den ist.
